(19) Europäisches Patentamt / European Patent Office / Office européen des brevets

(11) **EP 2 573 583 B1**

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(51) Int Cl.:
**A63B 29/02** *(2006.01)*    **G01S 5/02** *(2010.01)*

(21) Anmeldenummer: **11185278.6**

(22) Anmeldetag: **14.10.2011**

(54) **Verfahren und Suchgerät zum Suchen eines Sendegeräts**

Detector and method for detecting a transmitter

Procédé et appareil de recherche pour la recherche d'un appareil d'émission

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2011 EP 11182732**

(43) Veröffentlichungstag der Anmeldung:
**27.03.2013 Patentblatt 2013/13**

(73) Patentinhaber: **Ortovox Sportartikel GmbH 82024 Taufkirchen (DE)**

(72) Erfinder:
• **Matzner, Rolf, Dr.**
  **80639 München (DE)**
• **Greimel, Felix**
  **83278 Traunstein (DE)**
• **Jörg, Hannah**
  **81541 München (DE)**

(74) Vertreter: **Hofstetter, Schurack & Partner Patent- und Rechtsanwaltskanzlei PartG mbB Balanstrasse 57 81541 München (DE)**

(56) Entgegenhaltungen:
**EP-A1- 1 577 679      EP-A1- 2 065 722
US-A1- 2005 270 234    US-A1- 2006 128 354**

**Beschreibung**

Die vorliegende Erfindung betrifft ein Verfahren zum Suchen eines Sendegeräts mit einem Suchgerät, das mindestens eine erste und eine zweite Antenne zum Empfangen eines Sendesignals des Sendegeräts umfasst, wobei das Sendesignal mit einer bestimmten Sendepuls-Periode ausgesendete Sendepulse umfasst, sowie eine Lagebestimmungsvorrichtung zum Bestimmen zumindest einer Orientierungsänderung des Suchgeräts, folgende Schritte umfassend: a) Erfassen der vektoriellen magnetischen Feldstärken des vom Sendegerät ausgesendeten Feldes in zumindest zwei Dimensionen für mindestens einen ersten und einen zweiten Messpunkt relativ zu einer Bezugsachse des von einem Suchenden geführten Suchgeräts; und b) Erfassen zumindest einer Orientierungsdifferenz zwischen zumindest dem ersten und dem zweiten Messpunkt. Sie betrifft überdies ein Suchgerät zum Suchen eines Sendegeräts umfassend mindestens eine erste und eine zweite Antenne zum Empfangen eines Sendesignals des Sendegeräts, eine Lagebestimmungsvorrichtung zum Bestimmen zumindest einer Orientierungsänderung des Suchgeräts, und eine Verarbeitungsvorrichtung, die zumindest mit der ersten und der zweiten Antenne und der Lagebestimmungsvorrichtung gekoppelt ist, wobei die Verarbeitungsvorrichtung ausgelegt ist, die vektoriellen magnetischen Feldstärken des vom Sendegerät ausgesendeten Feldes in zumindest zwei Dimensionen für mindestens einen ersten und einen zweiten Messpunkt relativ zu einer Bezugsachse des von einem Suchenden geführten Suchgeräts zu erfassen.

Die vorliegende Erfindung wird im Nachfolgenden am Beispiel eines Lawinen-Verschütteten-Suchgeräts näher erläutert. Sie ist jedoch ohne Einschränkung auf andere Arten von Suchgeräten anwendbar, beispielsweise um in einem zerstörten Gebäude nach Personen zu suchen.

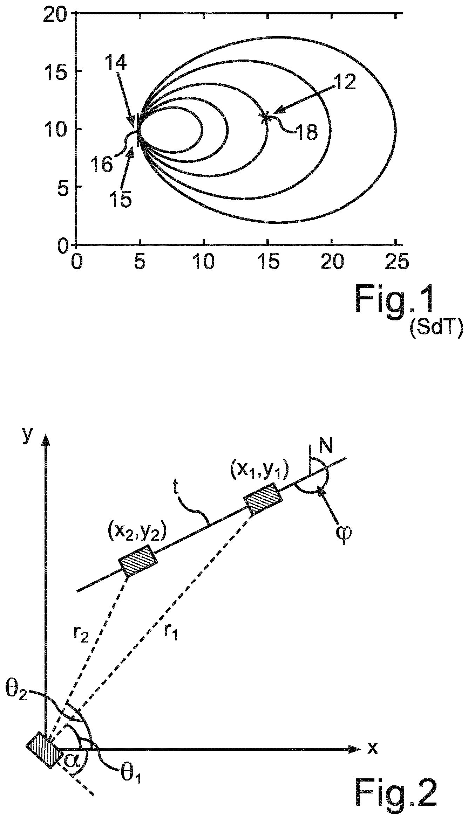

Die Technik heutiger Lawinen-Verschütteten-Suchgeräte basiert auf dem Verfolgen einer magnetischen Feldlinie. Fig. 1 zeigt in diesem Zusammenhang die Position eines Suchenden 12, der ein Lawinen-Verschütteten-Suchgerät 18 trägt, sowie die Position eines Verschütteten 14, der ein Sendegerät 15 mit einer Sendeantenne 16 trägt. Wie sich deutlich erkennen lässt, wird der Suchende 12, falls er sich nicht zufällig auf der Achse der Sendeantenne 14, befindet, so stets in einem - mitunter weiten - Bogen zum Sendegerät 15, das heißt zum Verschütteten 14, geführt. Die magnetischen Feldlinien sind die in Fig. 1 dargestellten, von der Sendeantenne 16 ausgehenden Kurven.

Diese Vorgehensweise hat folgende Nachteile:

- Der Suchende muss einen weiteren Weg zurücklegen als eigentlich notwendig.
- Entlang des gekrümmten Führungswegs steht nur die Richtung der Feldlinie (Feldvektor) zur Verfügung. Wegen der Krümmung kann daraus nicht einfach auf die tatsächliche Lage des Senders geschlossen werden. Der Suchende kann also nicht wissen, wo - bezogen auf seine eigene Position - der Sender tatsächlich liegt. Eine Suchplanung ist insofern nicht möglich.
- Die Messung der Richtung und Feldstärke ist stets lokal. Zwei Messungen an verschiedenen Positionen können nicht in Beziehung zueinander gesetzt werden. Somit ist keine Verbesserung der Genauigkeit durch Einbeziehung früherer Messungen möglich.
- Aus Richtung und Entfernung vergangener Messungen kann nicht auf die folgende Messung geschlossen werden. Bei Verlust des Sendesignals, beispielsweise infolge einer Überlagerung bei der Mehrfachsuche, kann also die Suche nicht einfach anhand eines zuvor bereits berechneten Ziels fortgesetzt werden.

Im Bereich der Feinsuche, das heißt in unmittelbarer Umgebung des Verschütteten, gilt es, zum einen die senkrechte Projektion des Verschütteten auf die Schneeoberfläche (Projektionspunkt) zu bestimmen, zum anderen auch seine Verschüttungstiefe. Da die vertikale Orientierung der Sendeantenne im Allgemeinen unbekannt ist, wird in der Nähe des Senders, üblicherweise bei zwei bis drei Meter Entfernung, die Richtungsanzeige ausgeschaltet. Der Suchende wechselt dann seine Suchstrategie. Er folgt nicht mehr dem Richtungspfeil, sondern behält vielmehr die momentane Ausrichtung des Suchgeräts bei. Durch langsames Vor- und Zurückbewegen einerseits sowie Links-/Rechtsbewegen andererseits sucht er die Position mit der geringsten Entfernungsanzeige, entsprechend der maximalen Feldstärke. Zur Bestimmung der Tiefe wird heute üblicherweise eine lineare oder quadratische Kombination der in drei Achsen gemessenen Feldstärke verwendet.

Diese Vorgehensweise geht mit einigen Nachteilen einher:

- Die Suche nach der maximalen Feldstärke erfordert hohe Konzentration und bedingt den höchsten Zeitanteil am gesamten Suchvorgang.
- Die lineare oder quadratische Kombination der Feldstärken ergibt nur eine ungefähre Tiefenschätzung.
- Der Projektionspunkt kann mit bestehenden Verfahren bei schräg liegender Sendeantenne nur näherungsweise richtig bestimmt werden.

Eine andere bekannte Vorgehensweise besteht darin, die Position des Suchenden im erdfesten Koordinatensystem mittels GPS zu bestimmen. Damit kann jeder vektoriellen Feldmessung eine bekannte Position im erdfesten Koordinatensystem zugeordnet werden. Liegen ausreichend Messwerte vor, kann der Ort des Senders ebenfalls im ortsfesten Koordinatensystem berechnet werden.

Nachteilig dabei ist die systembedingte Drift der GPS-Messung. Während der Dauer einer Suche driftet die gemessene Ortskoordinate um mehrere Meter. In der Folge kann der Ort des Senders nicht mit der für die Bergung des Verschütteten erforderlichen Genauigkeit geschätzt werden.

Die DE 10 2008 016 137 A1 löst dieses Problem, indem zusätzlich zum ortsvariablen suchenden Empfänger ortsfeste Referenzstationen eingesetzt werden, die ebenfalls das GPS-Signal empfangen und alle der gleichen Drift ausgesetzt sind. Damit kann die Bewegung des Suchenden relativ zu den Referenzstationen frei von Drift bestimmt werden. Im Ergebnis entspricht dieses Verfahren der Anwendung von Differenzial-GPS.

In der Praxis ist jedoch das Mitführen und Ausbringen der Referenzstationen ein erheblicher Nachteil. Allein das Ausbringen der Referenzstationen im Suchfeld verursacht einen Zeitaufwand, der durch eine beschleunigte Suche danach nicht mehr kompensiert werden kann.

Eine weitere Möglichkeit, einen Bezug zwischen einem erdfesten Koordinatensystem und dem magnetischen Feld herzustellen, besteht in der Messung und Auswertung von Lateral- und Drehbewegungen des Suchgeräts. Damit kann die relative Positionsänderung bezüglich des erdfesten Koordinatensystems zwischen einzelnen Feldmessungen bestimmt werden, so dass im Idealfall jede Position bis auf eine globale (für alle Positionen gleiche) Verschiebung und Drehung im erdfesten Koordinatensystem darstellbar ist. Entsprechend kann, wie vorstehend ausgeführt, die Position des Senders (mit derselben Verschiebung und Drehung) berechnet werden.

Nachteilig an dieser Vorgehensweise ist, dass die Berechnung einer translatorischen Änderung aus Beschleunigungsdaten eine doppelte Integration erfordert. Selbst geringste Fehler in den Anfangsbedingungen (anfängliche Geschwindigkeit) führen schon nach kurzer Zeit zu ständig wachsenden Positionsfehlern.

Als Variante könnte die Ausrichtung (der Winkel) aus der Messung des Erdmagnetfeldes bestimmt werden. Dies löst allerdings nicht das Problem der Instabilität der translatorischen Schätzung.

Aus der EP 2 065 722 A1 ist eine Vorrichtung zur Ortung von Objekten oder Personen, insbesondere für eine Lawinenverschüttetensuche, sowie ein Verfahren zur Ortung bekannt, bei dem zunächst eine absolute Position einer Empfangseinheit an verschiedenen Messpunkten durch Auswertung von GPS-Signalen bestimmt wird. An den verschiedenen Messpunkten werden die vektoriellen magnetischen Feldstärken des von einem Sender ausgesendeten Feldes relativ zu einer Bezugsachse der von einem Suchenden geführten Empfangseinheit erfasst. Anschließend wird eine relative Position des Senders relativ zur Empfangseinheit ermittelt durch Kreuzpeilung oder Anwendung eines räumlichen Feldmodells, das durch Bewegung der Empfangseinheit mittels kontinuierlicher Nachberechnung korrigiert und verbessert wird.

Aus der EP 1 577 679 A1 ist ein Suchgerät zur Ortung eines Senders, insbesondere ein Lawinenverschüttetensuchgerät, bekannt, wobei zum Absuchen eines Suchgebiets das Suchgerät durch einen Benutzer in einem Winkelbereich von Suchwinkeln geschwenkt wird, der das Suchgebiet überdeckt, welches die Position eines Verschütteten oder mehrerer Verschütteter auf zuverlässige und kostengünstige Weise selbsttätig bestimmt, mit einem Magnetfeldsensor, der das Erdmagnetfeld betreffende Sensorsignale an eine Signalverarbeitungseinrichtung ausgibt, die als Verarbeitungssignal der Ausgabeeinheit zugeführt werden und jeder Suchrichtung einen festen Suchwinkel, relativ zum Erdmagnetfeld, zuordnen, sodass zu jeder Zeit die Zuordnung des empfangenen Sendersignals eines Senders zu einem festen Suchwinkel möglich ist.

Weitere Lawinenverschüttetensuchgeräte sind bekannt aus der US 2005/0270234 A1 sowie der US 2006/0128354 A1.

Dabei beschäftigt sich die US 2005/0270234 A1 mit einem System sowie einem Verfahren zur Ortung der Richtung und Entfernung zu einer Hochfrequenzsignalquelle von einem Lawinensuchgerät aus zur Auffindung eines Lawinenopfers. Das System und das Verfahren umfassen ein Hochfrequenzsignal-Ortungsgerät sowie eine sich auf dem Signalortungsgerät befindende graphische Anzeige. Die graphische Anzeige des Empfängers liefert dem Suchenden einen ersten Wegpunktwert, der zur Hochfrequenzsignalquelle gehörige Daten betreffend die Richtung und Entfernung vom Lawinensuchgerät umfasst. Die Richtungs- und Entfernungsdaten basieren auf den empfangenen Hochfrequenzsignalen. Eine Verarbeitungseinheit innerhalb des Empfängerortungsgeräts empfängt und misst von der Hochfrequenzsignalquelle abgegebene Hochfrequenzsignale. Das Ortungsgerät liefert vorteilhafterweise ständig aufeinander folgende Wegpunktwerte an den Benutzer, wobei die aufeinander folgenden Wegpunktwerte Richtungs- und Entfernungsdaten bezüglich der Hochfrequenzsignalquelle liefern. Die durch die aufeinander folgenden Wegpunktwerte gelieferten Entfernungsdaten basieren auf einem Pfadverlustgradienten der empfangenen Hochfrequenzsignale von dem Lawinensuchgerät.

Die US 2006/0128354 A1 befasst sich mit einem tragbaren Rettungsgerät sowie einem Verfahren zur Ortung, mittels eines ersten in einen Suchmodus versetzten Rettungsgeräts sowie eines zweiten in einen Notmodus versetzten Rettungsgeräts. Bei dem Verfahren wird ein eine Geräteidentifizierung tragendes Notsignal von dem zweiten Rettungsgerät empfangen. Eine erste Peilung und eine zweite Peilung zu dem zweiten Rettungsgerät werden erhalten. Die erste und die zweite Peilung werden von einer ersten und zweiten Position genommen. Eine Entfernung zwischen diesen Positionen wird bestimmt. Eine aktuelle Entfernung und eine aktuelle Peilung zu dem zweiten Rettungsgerät werden auf der Basis der ersten und zweiten Peilung und der Entfernung bestimmt. Die aktuelle Peilung und die aktuelle Entfernung werden an einen Benutzer des ersten Rettungsgerätes kommuniziert. Das tragbare Rettungsgerät wird zur Durchführung des Verfahrens benutzt und umfasst zu diesem Zweck eine erste Kommunikationseinheit zur Übertragung und zum Empfang von Notsignalen, einen Kompass, eine Verarbeitungseinheit, eine Benutzerschnittstelle sowie eine Einrichtung zum Schalten zwischen einem Such- und einem Notmodus, wobei das erste Kommunikationsgerät aufgrund seiner Antennenstruktur richtungstauglich ist.

Die Aufgabe der vorliegenden Erfindung besteht deshalb darin, ein gattungsgemäßes Verfahren beziehungsweise ein gattungsgemäßes Suchgerät derart weiterzubilden, dass eine Verkürzung des Suchvorgangs ermöglicht wird.

Diese Aufgabe wird gelöst durch ein Verfahren mit den Merkmalen von Patentanspruch 1 sowie durch ein Suchgerät mit den Merkmalen von Patentanspruch 16.

Die vorliegende Erfindung beruht auf der Erkenntnis, dass die oben genannte Aufgabe gelöst werden kann, wenn es gelingt, aus einer oder mehreren vektoriellen Messungen des magnetischen Feldes die relative Position des Senders zum Suchenden in einem erdfesten Koordinatensystem zu bestimmen. Erfindungsgemäß soll die Position des Senders relativ zur Position des Suchenden aus mehreren miteinander kombinierten Messungen bestimmt werden, die während der Bewegung des Suchenden an Messpunkten getätigt werden. Die Messpunkte sind in der Praxis nicht frei wählbar, sondern ergeben sich aus der Tatsache, dass das Sendesignal gepulst ist und etwa einmal je Sekunde eine Messung des magnetischen Feldes am Empfangsort möglich ist. Bei der zweidimensionalen Suche ist die Position nach Entfernung und ebenem Winkel zu bestimmen, bei der dreidimensionalen Suche nach Entfernung und Raumwinkel, oder gleichbedeutend, nach Entfernung, ebenem Winkel und Verschüttungstiefe. Als Messvariablen stehen in jedem Messpunkt die vektoriellen magnetischen Feldstärken des vom Sender ausgesendeten Feldes - je nach Aufgabenstellung zwei- bzw. dreidimensional - in Bezug auf das vom Suchenden geführte Suchgerät, sowie der Winkel zwischen der Längsachse des Suchgeräts und einer Referenzrichtung zur Verfügung.

Die Erfindung basiert insbesondere auf der Erkenntnis, dass sich ein Positionsvektor, der den Ort zumindest einen Messpunkts relativ zum Ort des Sendegeräts wiedergibt, dann besonders geschickt bestimmen lässt, wenn zwischen dem ersten und dem zweiten Messpunkt mindestens eine geometrische Beziehung angenommen wird. Erst auf diese Weise ergeben sich eine oder mehrere zusätzliche Beziehungen zwischen den Positionsvektoren in den und der Orientierungsdifferenz zwischen den Messpunkten. Ein Positionsvektor enthält die Koordinaten eines Messpunktes bezogen auf den Sender. Auf diese Weise können Messungen an verschiedenen Positionen zueinander in Beziehung gesetzt werden, insbesondere können ganz allgemein frühere Messungen berücksichtigt werden, um einen optimierten Führungsweg zum Sendegerät zu ermitteln. Durch die Optimierung des Führungswegs wird sowohl die vom Suchenden zurückzulegende Strecke als auch die für den Suchvorgang benötigte Zeit signifikant verkürzt, wodurch die Überlebenschance einer verschütteten Person deutlich steigt.

Erfindungsgemäß sind deshalb folgende weitere Schritte vorgesehen: c) Annehmen mindestens einer geometrischen Beziehung zwischen zumindest dem ersten und dem zweiten Messpunkt; d) Annehmen von Anfangswerten für den Positionsvektor in zumindest zwei Dimensionen in zumindest dem ersten und dem zweiten Messpunkt; e) Annehmen einer Orientierung einer Sendeantenne des Sendegeräts bezogen auf eine erste vorgebbare Referenzrichtung; f) Berechnen der vektoriellen magnetischen Feldstärken des vom Sendegerät ausgesendeten Feldes in zumindest zwei Dimensionen für zumindest den ersten und den zweiten Messpunkt auf der Basis der Annahme nach den Schritten c) bis e) sowie der erfassten Orientierungsdifferenz gemäß Schritt b); g) Berechnen eines Fehlervektors zwischen den in Schritt a) erfassten vektoriellen magnetischen Feldstärken und den in Schritt f) berechneten vektoriellen magnetischen Feldstärken; und h) numerisches Minimieren einer Funktion des in Schritt g) berechneten Fehlervektors durch Verändern der in den Schritten c) bis e) getroffenen Annahmen, bis eine vorgebbare Toleranzschwelle für die Funktion des Fehlervektors unterschritten wird.

Zur Bestimmung der Verschüttungstiefe ist es besonders bevorzugt, dass in Schritt c) die vektorielle magnetische Feldstärke des vom Sendegerät ausgesendeten Feldes in drei Dimensionen erfasst wird, in Schritt d) die Anfangswerte des Positionsvektors in drei Dimensionen angenommen werden, in Schritt e) die Orientierung zumindest der ersten und der zweiten Antenne bezogen auf zwei unterschiedliche Referenzrichtungen angenommen wird und in Schritt f) die vektoriellen magnetischen Feldstärken in drei Dimensionen berechnet werden. Sind die erste und die zweite Antenne starr miteinander verbunden, genügt die Annahme einer Orientierung der ersten Antenne. Aus dieser ergibt sich dann die Orientierung der zweiten Antenne.

Selbst wenn im Schritt b) das Erfassen einer Orientierungsdifferenz zwischen zumindest dem ersten und dem zweiten Messpunkt - zum Beispiel mit Hilfe eines Drehratensensors und anschließender Integration - genügt, ist es besonders einfach im Hinblick auf bekannte Lagebestimmungsvorrichtungen, wenn in Schritt b) die Orientierung des Suchgeräts für zumindest den ersten und den zweiten Messpunkt bezogen auf eine zweite vorgebbare Referenzrichtung erfasst wird. Daraus lässt sich dann die Orientierungsdifferenz auf besonders einfache Weise ermitteln.

Es hat sich als besonders vorteilhaft erwiesen, wenn im Schritt h) eine Funktion des Fehlervektors die quadratische oder euklidische Norm ist. Für derartige Funktionen stehen in der Mathematik geeignete Verfahren zur Verfügung, so dass eine Anwendung innerhalb eines erfindungsgemäßen Verfahrens ohne großen Aufwand möglich ist.

Eine weitere Verbesserung des Suchvorgangs hinsichtlich Strecke und Zeit lässt sich erreichen, wenn der in Schritt g) aufgestellte Fehlervektor zusätzliche Komponenten zur Berücksichtigung der Abweichung der vom Suchenden zwischen zumindest dem ersten und dem zweiten Messpunkt zurückgelegten Wegkurve von der geometrischen Beziehung gemäß Schritt c) enthält und diese zusätzlichen Komponenten in die in Schritt h) minimierte Funktion eingehen.

Eine bevorzugte Ausführungsform eines erfindungsgemäßen Verfahrens zeichnet sich durch folgende weitere Schritte aus: i) Wiederholen der Schritte a) bis h) für mindestens einen weiteren Block mit mindestens zwei Messpunkten, und j) iteratives Verbessern des sich für den mindestens einen weiteren Block ergebenden Positionsvektors durch Kombinieren mit dem Positionsvektor mindestens eines vorhergehenden Blocks. Wenngleich bereits durch Auswertung des ersten Blocks mit mindestens zwei Messpunkten prinzipiell der Senderort bestimmt werden kann, so eröffnet das erfindungsgemäße Verfahren die Möglichkeit, die Positionsvektoren, die sich aus weiteren Messblöcken mit mindestens zwei Messpunkten ergeben, mit den Positionsvektoren, die auf der Basis vorhergehender Blöcke ermittelt wurden, zu kombinieren. Dies bedeutet, je mehr Blöcke miteinander kombiniert werden, umso genauer lässt sich der Senderort ermitteln. Dies kann iterativ während des Suchvorgangs erfolgen, so dass der Suchende nur minimale Abweichungen vom direkten Weg zwischen Suchgerät und Sendegerät macht. Dadurch wird der Suchprozess weiter optimiert.

Besonders bevorzugt werden die Schritte i) und j) mit jedem neuen Block von Messpunkten wiederholt, so dass in die Minimierung des Fehlervektors für den mindestens einen weiteren Block kumulierte Zwischenergebnisse früherer Blöcke einbezogen werden, wobei in Schritt j) der jeweils vorhergehende Positionsvektor iterativ verbessert wird.

Bei einer bevorzugten Weiterbildung wird demnach im Schritt h) ein iteratives Optimierungsverfahren, bevorzugt ein Gauß-Newton-Verfahren oder ein Levenberg-Marquardt-Verfahren, und in Schritt j) ein Extended Kalman Filter, angewendet. Die Anwendung derartiger Optimierungsverfahren auf vorgegebene Fehlervektoren sind aus der Mathematik, insbesondere aus der Numerischen Optimierung, hinlänglich bekannt.

Die Blöcke können disjunkt oder nicht disjunkt sein. Bei der Wahl disjunkter Blöcke kann die Anforderung an die Rechenkapazität des Suchgeräts reduziert werden, während bei nicht disjunkten Blöcken im Hinblick auf die zurückgelegte Suchstrecke mehr Iterationen möglich sind, was in einer weiteren Optimierung des Suchvorgangs resultiert.

Die geometrische Beziehung, die in Schritt c) angenommen wird, kann mindestens eine der folgenden sein: c1) Die Messpunkte liegen auf einer Trajektorie, die unabhängig vom Verlauf des vom Sendegerät ausgesendeten magnetischen Feldes ist, insbesondere auf einer Geraden, einem Kreis oder einer Parabel; oder c2) die Messpunkte liegen auf einer magnetischen Feldlinie des vom Sendegerät ausgesendeten magnetischen Feldes.

In diesem Zusammenhang ist es besonders bevorzugt, wenn während einer ersten Phase die Messpunkte jeweiliger Blöcke auf einer magnetischen Feldlinie liegen, wobei während einer zweiten Phase, die sich an die erste Phase anschließt, die Messpunkte jeweiliger Blöcke auf einer Trajektorie liegen, insbesondere einer Geraden, deren Richtung sich aus dem Ergebnis der Minimierung des Fehlervektors in Schritt h) ergibt. Die erste Phase wird dabei bevorzugt solange eingehalten, bis genügend Messungen für eine ausreichend genaue Schätzung des Senderorts vorliegen. Dann kann der Suchende direkt in Richtung des berechneten Ziels geschickt werden, wobei der Schätzprozess nun auf einem Geradenstück fortgesetzt und mit weiteren Messpunkten verfeinert werden kann. Mit jedem weiteren Messpunkt kann eine verbesserte Schätzung der Richtung gewonnen und somit eine verbesserte Richtung zum Ziel angegeben werden.

Es ist besonders vorteilhaft, wenn während der Suche auf der Anzeigeeinheit des Suchgeräts eine Suchrichtung für den Suchenden angezeigt wird, die der in Schritt c) angenommenen geometrischen Beziehung entspricht. Dadurch kann sichergestellt werden, dass der Suchende die in Schritt c) angenommene geometrische Beziehung, die eine Grundlage des erfindungsgemäßen Verfahrens darstellt, weitgehend einhält. Je besser der Suchende diese Restriktion einhält, umso genauer sind die erzielten Berechnungsergebnisse.

Insbesondere während der Suche, das heißt nachdem genügend Messungen vorgenommen wurden, ist es bevorzugt, wenn auf der Anzeigeeinheit des Suchgeräts eine Suchrichtung für den Suchenden angezeigt wird, die gemäß dem in Schritt h) bestimmten Positionsvektor in die Richtung des Sendegeräts weist. Auf diese Weise wird der Suchende zu dem jeweiligen Zeitpunkt kürzest möglichen und optimalen Weg zum Sendegerät geführt.

Als besonders vorteilhaft hat es sich erwiesen, wenn die vektoriellen magnetischen Feldstärken in kartesischen Koordinaten erfasst und verarbeitet werden, während die Positionsvektoren bevorzugt in Polarkoordinaten erfasst und verarbeitet werden. Wenngleich andere Darstellungen möglich sind, sind die hierbei entstehenden Gleichungssysteme sehr übersichtlich und können mit wenig Rechenaufwand verarbeitet werden.

Bevorzugt wird in Schritt b) die Orientierungsdifferenz oder die Orientierung des Suchgeräts mittels eines Kompasses und/oder mittels eines rotatorischen Inertialsystems erfasst. Die Fehlerfortpflanzung aus Anfangswertfehlern ist bei der vorliegenden Erfindung wegen des kurzen Interpolationszeitraums in der Größenordnung einer Sekunde tolerierbar. Dadurch ist das Verfahren prinzipiell auch anwendbar, um längere Intervalle, in denen keine aktuellen Messwerte zur Verfügung stehen, durch Interpolation zu überbrücken.

Es ist weiterhin bevorzugt, dass der Positionsvektor mit weiterer Ortsinformation, insbesondere durch GPS-Messungen, kombiniert wird. Dies ist bei einem erfindungsgemäßen Verfahren ohne Weiteres möglich und ermöglicht eine weitere Verbesserung des Suchprozesses, beispielsweise durch die erwähnten iterativen Optimierungsverfahren. Zum Beispiel kann die Abweichung zwischen den Positionswerten und der mittels GPS gewonnenen Position als weitere Komponente in den Fehlervektor nach g) aufgenommen werden.

Besonders bevorzugt wird in einem weiteren Schritt k) das Ziel der Suche auf einer Anzeigeeinheit perspektivisch angezeigt. Dabei kann das Ziel, wenn sich der Suchende in einem ersten vorgebbaren Entfernungsbereich vom Ziel befindet, zweidimensional auf der Anzeigeeinheit angezeigt werden, wobei das Ziel, wenn sich der Suchende in einem zweiten vorgebbaren Entfernungsbereich befindet, der insbesondere einer geringeren Entfernung vom Ziel entspricht als der erste vorgebbare Entfernungsbereich, dreidimensional auf der Anzeigeeinheit angezeigt wird. Im ersten vorgebbaren Entfernungsbereich gibt die Perspektive realistisch den Blick wieder, den der Sucher hätte, wenn er - am Beispiel eines in einer Lawine Verschütteten - den Verschütteten oder seinen Projektionspunkt auf die Schneeoberfläche sehen könnte. Dabei kann die Schneeoberfläche durch Zielringe graphisch angedeutet sein. In größerer Entfernung, wenn die Anzeige der Verschüttungstiefe keinen Sinn ergibt, wird der Schnee opak (intransparent) dargestellt. Der Suchende sieht dann nur eine Markierung der Projektion der Position des Verschütteten auf die dargestellte Schneeoberfläche. Im zweiten vorgebbaren Entfernungsbereich hingegen wird die Verschüttungstiefe angezeigt, so dass Geländeunebenheiten keinen signifikanten Einfluss mehr auf die tatsächliche Tiefe haben. Bevorzugt wird im zweiten vorgebbaren Entfernungsbereich eine Verschüttungstiefe des Sendegeräts auf der Anzeigeeinheit angezeigt.

Weitere vorteilhafte Ausführungsformen ergeben sich aus den Unteransprüchen.

Die mit Bezug auf das erfindungsgemäße Verfahren vorgestellten bevorzugten Ausführungsformen und deren Vorteile gelten entsprechend, soweit anwendbar, für das erfindungsgemäße Suchgerät.

Im Nachfolgenden werden nunmehr Ausführungsformen der vorliegenden Erfindung unter Bezugnahme auf die beigefügten Zeichnungen näher beschrieben. Es zeigen:

Fig. 1 in schematischer Darstellung den Suchprozess bei einem aus dem Stand der Technik bekannten Suchverfahren;

Fig. 2 eine schematische Darstellung zur Einführung verschiedener Variablen bei einer Ausführungsform eines erfindungsgemäßen Suchverfahrens;

Fig. 3 eine schematische Darstellung zur Nutzung von Messpunkten, die stets in Gruppen auf einer Geraden liegen, bei einem erfindungsgemäßen Suchverfahren;

Fig. 4 eine schematische Darstellung, wie sie bei einem erfindungsgemäßen Verfahren auf einer Anzeigeeinheit in größerer Entfernung (Fig. 4a) sowie bei geringerer Entfernung (Fig. 4b) angezeigt wird;

Fig. 5 in schematischer Darstellung die Anzeige auf einer Anzeigeeinheit bei einem erfindungsgemäßen Verfahren bei der Feinsuche im Nahbereich (Fig. 5a), kurz vor dem Ziel (Fig. 5b), in optimaler Position (Fig. 5c) sowie wenn der Suchende zu weit gegangen ist (Fig. 5d); und

Fig. 6 eine schematische Darstellung zur Wahl der korrekten Perspektive beim Überlaufen des Ziels.

Die nachfolgenden Ausführungen beschreiben ein Ausführungsbeispiel eines erfindungsgemäßen Verfahrens zum Suchen eines Sendegeräts mit einem Suchgerät, das mindestens eine erste und eine zweite Antenne zum Empfangen eines Sendesignals des Sendegeräts umfasst, wobei das Sendesignal mit einer bestimmten Sendepuls-Periode ausgesendete Sendepulse umfasst, sowie eine Lagebestimmungsvorrichtung zum Bestimmen mindestens einer Orientierungsänderung des Suchgeräts. Die mit Bezug auf Fig. 1 eingeführten Bezugzeichen werden weiter verwendet, soweit gleiche und gleichwirkende Elemente betroffen sind.

Als Messvariablen stehen im zweidimensionalen Fall für jeden Messpunkt i

- ein magnetischer Feldvektor $H_i$ mit zwei - vorzugsweise orthogonalen - Komponenten relativ zur Bezugsachse des Suchgeräts, und
- eine Orientierung $\varphi_i$ (Winkel) der Bezugsachse des Suchgeräts bezogen auf eine beliebige Referenzrichtung

zur Verfügung. Eine globale Unbekannte, das heißt gleich unbekannt für alle Messpunkte, ist die Orientierung $\alpha$ der Sendeantenne des sendenden Geräts bezogen auf eine - vorzugsweise die selbe - Referenzrichtung. Dazu kommen in jedem Messpunkt als weitere Unbekannte die beiden Komponenten des zweidimensionalen Positionsvektors $p_i$ des i-ten Messpunkts relativ zur Position des Senders. Dabei gibt der Positionsvektor den Ort des i-ten Messpunkts relativ zum Ort des Sendegeräts wieder.

Lässt man die Orientierung der Längsachse des Suchgeräts außer Betracht, stehen bei zwei Messpunkten i=1 und i=2 fünf Unbekannten $p_1$, $p_2$ (jeweils zwei Komponenten) und $\alpha$ nur vier Messwerte $H_1$ und $H_2$ (ebenfalls zwei Komponenten) gegenüber. Mit jedem weiteren Messpunkt i kommen zwei weitere Unbekannte $p_i$ und zwei Messwerte $H_i$ hinzu, so dass das Problem grundsätzlich unterbestimmt ist.

Dieses Dilemma wird erfindungsgemäß dadurch gelöst, dass man für die Bewegung des Suchenden geometrische Restriktionen einführt. Diese ergeben eine oder mehrere zusätzliche Beziehungen zwischen den Positionen $p_i$ und der Messvariablen $\varphi_i$. Mit einer einzigen solchen, zusätzlichen Beziehung ist das Gleichungssystem vollständig bestimmt. Als Restriktionen in diesem Sinne können vorzugsweise verwendet werden:

- Die Ausrichtung des Suchgeräts in beiden (oder mehreren) Messpunkten muss der Richtung der Geraden entsprechen, die die beiden Messpunkte verbindet. Dies ist typischerweise dann gegeben, wenn der Suchende einen geraden Weg geht und das Messgerät vor sich her trägt, ohne es zu drehen oder zu schwenken. In der Praxis wird dies dadurch erreicht, dass die Anzeige des Suchgeräts eine konstante Bewegungsrichtung "geradeaus nach vorne" vorgibt.
- Allgemein kann an Stelle einer Geraden jede beliebige, a priori bekannte Trajektorie (Bahnkurve) für die Bewegung des Suchenden vorgegeben werden. Für eine einfache Aufstellung des Gleichungssystems sollte diese Trajektorie parametrisierbar sein.
- Der Suchende folgt einer magnetischen Feldlinie. Dies ist beim heute allgemein genutzten Suchprozess grundsätzlich der Fall. In der Praxis gibt das Suchgerät in jedem Messpunkt die Richtung des gemessenen Feldstärkevektors bezogen auf die eigene Gerätelängsachse aus.

Die relativen Positionsvektoren $p_i$ können in einem beliebigen Koordinatensystem dargestellt werden, vorzugsweise in Polarkoordinaten mit dem Ort des Senders als Ursprung.

Für die Schätzung der Position des Senders erforderlich ist die Kenntnis der Orientierung $\varphi$ des Suchgeräts. Dazu genügt es, die Orientierung (Richtung) relativ zu einem beliebigen erdfesten Koordinatensystem zu bestimmen - das heißt ein konstanter Offset gegen die Himmelsrichtung Nord ist ohne Belang. Diese Lageinformation kann zum Beispiel aus der Messung des Erdmagnetfeldes (Kompass) oder aus einem rotatorischen Inertialsystem (Drehratensensoren) gewonnen werden. Im letzteren Fall wird die aktuelle Richtung als Summe aller Winkeländerungen gegenüber einer Referenzrichtung zu einem beliebig gewählten Startzeitpunkt definiert.

Für das folgende Beispiel zur approximativen Bestimmung der Senderposition aus den Messvariablen in zwei Messpunkten wird für die Positionsvektoren ein Polarkoordinatensystem ($r_i$, $\theta_i$) mit Ursprung im Senderort verwendet. Das magnetische Feld am Empfängerort, das heißt am jeweiligen Messpunkt, wird in einem mit dem Suchgerät fest verbundenen kartesischen Koordinatensystem ($u_i$, $v_i$) beschrieben.

Fig. 2 zeigt in schematischer Darstellung die Bezeichnung der Variablen im Fall einer Geraden als zwischen dem ersten und dem zweiten Messpunkt gewählte geometrische Restriktion. N steht für die Richtung Nord, t bezeichnet den Abstand zwischen Messpunkt 1 und Messpunkt 2.

Die Komponenten der Messwerte $H_i$ (i = 1, 2) werden als v- und u-Komponenten bezeichnet. Dabei bezeichnet v die Längsrichtung des Suchgeräts und u eine Richtung orthogonal dazu. Aus den Maxwell-Gleichungen und aus der Projektion des Feldvektors auf die in u- beziehungsweise v-Richtung orientierten Suchantennen des Suchgeräts resultieren folgende Feldgleichungen:

$$H_i = \begin{pmatrix} Hv_i \\ Hu_i \end{pmatrix} = \begin{pmatrix} \dfrac{-iA}{8\pi r_i^3}(3\sin(\varphi_i + \alpha + 2\theta_i) + \sin(\varphi_i - \alpha)) \\ \dfrac{-iA}{8\pi r_i^3}(3\cos(\varphi_i + \alpha + 2\theta_i) + \cos(\varphi_i - \alpha)) \end{pmatrix}, \ p_i = \begin{pmatrix} r_i \\ \theta_i \end{pmatrix}$$

iA ist das Produkt aus Strom durch die Wicklung der Sendeantenne und deren Querschnitt. In dem Spezialfall, dass die Messpunkte 1 und 2 auf einer Geraden liegen, gilt es, durch Schätzung des Vektors

$$z = \left(r_1, \theta_1, r_2, \theta_2, \alpha, t\right)^T$$

folgenden quadratischen Fehler zu minimieren:

$$E = \frac{1}{2}\sum_{i=1}^{6}\left\|g\right\|^2 ,$$

wobei g der Residuen- bzw. Fehlerfunktionsvektor ist, dessen Komponenten die Abweichungen der Messungen von den Feldgleichungen bzw. den Fehler der Geradengleichung - ausgewertet an der aktuellen Schätzung z - angeben.

Für g gilt:

$$g = \begin{pmatrix} Hv_1^{calc} - hv_1^{meas} \\ Hu_1^{calc} - Hu_1^{meas} \\ Hv_2^{calc} - Hv_2^{meas} \\ Hu_2^{calc} - Hu_2^{meas} \\ r_2\cos\theta_2 - r_1\cos\theta_1 - t\sin\varphi \\ r_2\sin\theta_2 - r_1\sin\theta_1 - t\cos\varphi \end{pmatrix}$$

Das Superskript "meas" dient zur Unterscheidung tatsächlich gemessener von aus dem geschätzten momentanen Zustand rückgerechneter Größen, die mit der Bezeichnung "calc" gekennzeichnet sind. Die Orientierung $\varphi$ ist stets gemessen, der Einfachheit halber wird hier auf den Zusatz "meas" verzichtet.

Man kann den geometrischen Zusammenhang statt der Parametrisierung in Polarkoordinaten beschreiben. Außerdem kann in beiden Ausführungen die geometrische Beziehung in den Feldgleichungen substituiert werden. Dadurch wird g auf vier Komponenten reduziert, aber die Gleichungen um einiges komplizierter. Im Fall anderer Restriktionen werden diese in $g_5$ und $g_6$ eingesetzt und sonst äquivalent behandelt.

Es ergibt sich folgendes nichtlineares Ausgleichsproblem:

Start: $z^0$ beliebig, $n = 0$
Auswertung: $g^n = g(z^n)$, $\nabla g^n = \nabla g(z^n)$
Löse (mit QR-Zerlegung): $(\nabla g^n \nabla g^{nT})\cdot\Delta z^n = \nabla g^n g^n$
Update: $z^{n+1} = z^n + \sigma^k\Delta z^n$, $\sigma^k$ positive Schrittweite
Test: falls $E(z^{n+1}) < tol \rightarrow$ STOP, sonst $n = n + 1$

Das nichtlineare Ausgleichsproblem wird wie oben beschrieben mit einem Gauß-Newton-Verfahren numerisch gelöst. Dabei wird das Residuum basierend auf der Methode der kleinsten Quadrate minimiert. Das nichtlineare Ausgleichsproblem wird durch eine Folge linearer ersetzt, deren Normalengleichungen mit dem QR-Verfahren gelöst werden. Ist das Problem schlecht konditioniert, beispielsweise aufgrund verrauschter Daten, kann es sinnvoll sein, statt des Gauß-Newton-Verfahrens ein Levenberg-Marquardt-Verfahren, eine gedämpfte Variante des Gauß-Newton-Verfahrens, anzuwenden. Zu den genannten Verfahren siehe beispielsweise Nocedal, Jorge; Wright Stephen J.: "Numerical Optimization", New York: Springer, 1999.

Die vorstehend beschriebene Methode kann sowohl planar zur Bestimmung des Projektionspunktes des Senders in die Suchebene (Schneeoberfläche) als auch räumlich zur vollständigen Bestimmung der Koordinaten des Senders (einschließlich der Verschüttungstiefe) angewandt werden.

In letztgenanntem Fall sind die Unbekannten $p_i$ und die Messvariablen $H_i$ jeweils um eine dritte Komponente zu erweitern. Des Weiteren kommt eine weitere globale Unbekannte $\beta$ als Schräglage der Sendeantenne um eine zweite Achse - vorzugsweise in der senkrechten Ebene - hinzu. $\beta$ beschreibt somit die vertikale Orientierung der Sendeantenne. Das zuvor zur generellen Unterbestimmtheit Gesagte und die Lösung mithilfe geometrischer Restriktionen gelten auch für den räumlichen Fall.

Da die Verschüttungstiefe als Abstand zwischen Sender und Schneedecke zu verstehen ist, kann sie in nicht-ebenem Gelände erst in relativer Nähe zum Verschütteten sinnvoll bestimmt und angezeigt werden. Somit ist eine räumliche Schätzung (und die Anzeige des Ergebnisses) erst im Bereich von unterhalb etwa 8 m Abstand sinnvoll und nötig.

Lawinen-Verschütteten-Suchgeräte senden ungefähr einen Impuls je Sekunde. Somit kann die berechnete und an den Benutzer ausgegebene Positionsinformation des Senders nur einmal pro Sekunde erneuert werden. Sie springt bei Bewegung des Suchenden dann praktisch im Sekundentakt. Kennte man die Bewegung des Suchenden (translatorisch und rotatorisch), so könnte die Anzeige auch zwischen den Sendesignalen ruckfrei an die Bewegung des Suchenden angepasst werden. Rotatorische Lageänderungen können hierbei durch vektorielle Messung des Erdmagnetfeldes oder inertial, beispielsweise mit Drehratensensoren, erfasst werden. Translatorische Bewegungen wären mithilfe eines Inertialsystems, beispielsweise Beschleunigungssensoren, erfassbar. Die Fehlerfortpflanzung aus Anfangswertfehlern ist wegen des kurzen Interpolationszeitraums in der Größenordnung einer Sekunde tolerierbar.

Dieses Verfahren ist prinzipiell auch anwendbar, um längere Intervalle, in denen keine aktuellen Messwerte zur Verfügung stehen, durch Interpolation zu überbrücken. Dies tritt beispielsweise bei der zeitweisen Superposition von Signalen mehrerer Sender auf.

Stehen neben den mit dem beschriebenen Verfahren ermittelten Positionsdaten $p_i$ weitere Ortsinformationen $d_i$, beispielsweise aus GPS-Messungen, zur Verfügung, so kann das Ergebnis beider Schätzungen $d_i$ und $p_i$ durch bekannte Optimierungsverfahren, beispielsweise Kalman-Filter, weiter verbessert werden.

Für den Suchprozess kann anfangs eine der Varianten einer geometrischen Restriktion gewählt werden, bis genügend Messungen für eine ausreichend genaue Schätzung durchgeführt werden konnten. Dann wird der Suchende direkt in Richtung des berechneten Ziels geschickt und folgt somit wieder einer Geraden (der erste Fall einer geometrischen Restriktion). Entlang der Geraden kann der Schätzprozess nun fortgesetzt und die Zielschätzung so immer weiter verfeinert werden.

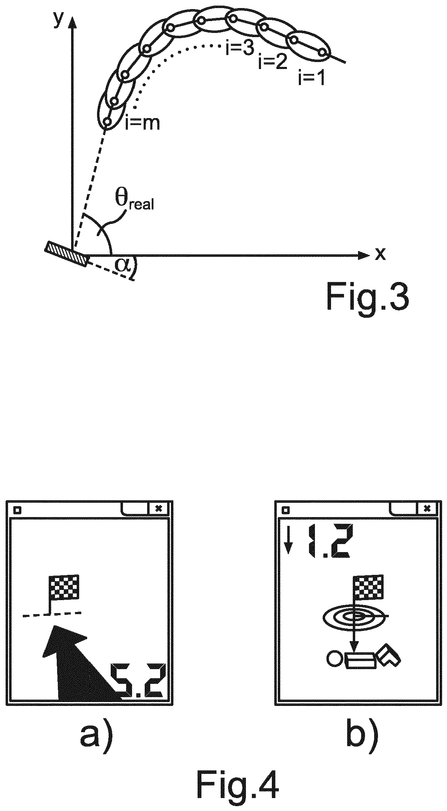

Fig. 3 zeigt in diesem Zusammenhang die Nutzung von Messpunkten, die stets in Gruppen auf einer Geraden liegen, zunächst vier, dann jeweils zwei (überlappend) bis zur Neuberechnung der Schätzrichtung.

Die ursprüngliche Schätzung der Senderposition wird durch neue Messungen fortlaufend verbessert. Zu diesem Zweck werden die Messpunkte in Blöcke eingeteilt. Vorzugsweise besteht ein Block aus zwei Messpunkten. Die Blöcke können hinsichtlich der Messpunkte disjunkt sein oder sich jeweils in wenigstens einem Messpunkt überlappen.

Sobald mehrere Blöcke in die Schätzung mit einfließen, kann der Schätzvektor um die neu hinzugekommenen Variablen erweitert werden, oder neu hinzugekommene Variablen werden in einem Zwischenschritt in bestehende Variablen mithilfe der Geradengleichungen transformiert.

Basierend auf der bestehenden Schätzung, den neuen Messdaten und früheren Messungen und Schätzungen wird nun die Senderpositionsschätzung iterativ verbessert. Dies geschieht im Beispiel mithilfe eines Extended Kalman Filters - einem inkrementellen Optimierungsverfahren auf Basis des Gauß-Newton-Verfahrens für zwei Messpunkte. Dazu bilden immer zwei Messpunkte einen Block. Wie bereits oben beschrieben, ist das Senderpositionsschätzungsproblem für jeden Block für sich lösbar. Anstelle eines Kalman Filters kann insbesondere auch eine Datenfusion beziehungsweise ein Partikelfilter Anwendung finden.

Kommt ein neuer Block, das heißt zwei neue Messwerte $H_i$, hinzu, wird mithilfe des inkrementellen Gauß-Newton-Verfahrens ein Update des Variablenvektors und somit der Position des Senders bestimmt. Daraus ergibt sich die neue Laufrichtung $\varphi_{new}$. Das nichtlineare Ausgleichsproblem lautet nun $\min E = \min \sum \|g_i\|$, wobei hier der Index i die Blöcke durchläuft.

Im Einzelnen:

1. <u>Start:</u> $z^0$ beliebig, $n = 0$, $i = 1$

2. <u>Innere Iteration:</u>

<u>Auswertung:</u> $g_i^n = g_i\left(z_i^n\right),\ \nabla g_i^n = \nabla g_i\left(z_i^n\right)\ H_i = \lambda H_{i-1} + \nabla g_i^n \nabla g_i^{nT}$

<u>Löse</u> (mit QR-Zerlegung): $H_i \cdot \Delta z_i^n = \nabla g_i^n g_i^n$

<u>Update:</u> $z_{i+1}^n = z_i^n + \sigma^k \Delta z_i^n$, $\sigma^k$ positive Schrittweite

falls $i = m \rightarrow 3$.

sonst: $i = i + 1 \rightarrow 2$.

3. <u>Test:</u> falls $E\left(z_m^n\right) < tol \rightarrow \text{STOP} \rightarrow \varphi_{new} = \dfrac{3}{2\pi} - \theta_2$ sonst: $z_0^{n+1} = z_m^n$, $n = n + 1$, $i = 1 \rightarrow 2$.

wobei $\lambda$ ein Gewichtungsfaktor für die vorhergehende Schätzung ist. Damit wird gesteuert, wie stark der alte Messwert im Vergleich zu dem neuen in den Iterationsprozess eingeht. Aufgrund des Gewichtungsfaktors wird damit sichergestellt, dass der Messwert umso weniger eingeht, je weiter er zurückliegt. Die Verweise → 3. beziehungsweise →2. bedeuten, dass i entsprechend gesetzt wird und anschließend mit 2. (innere Iteration) beziehungsweise 3. (Test) weitergemacht wird.

Die Informationen aus den vorangegangenen Blöcken gehen in die Updatebestimmung des aktuellen Blocks ein. Der Variablenvektor wird schon während des Durchlaufens durch die Datenmenge upgedatet (innere Iteration). Diese Durchläufe werden so lange wiederholt, bis der Fehler eine gewisse Toleranzschranke unterschreitet.

Die Tatsache, dass das Update sowohl auf der Basis der neuen Informationen berechnet wird, aber auch die Informationen der vorigen Blöcke mit eingehen, bewirkt, dass einzelne verrauschte oder unbrauchbare Daten die Positionsschätzung nicht zu sehr verfälschen. Das Update bereits nach Durchlaufen eines Datenblocks und nicht erst am Ende der Datenmenge bringt eine weitere Einsparung von Rechenzeit.

Das erfindungsgemäße Verfahren ermöglicht eine Einteilung des Suchprozesses in vier Phasen: Signalsuche, Grobsuche, Zielsuche, Feinsuche.

Neu gegenüber dem etablierten Suchprozess ist die Zielsuche. Hier wird in gerader Linie, aber ohne Berücksichtigung einer Tiefeninformation, auf den Verschütteten zugegangen.

Abweichend vom bisherigen Suchprozess ist in der Feinsuche kein manuelles Suchen des Feldstärkemaximums mehr erforderlich. Vielmehr kann der Suchende direkt zur korrekten Position über dem Verschütteten geführt und über die Verschüttungstiefe informiert werden.

Die Möglichkeit, die Lage des Suchenden relativ zur Lage des Verschütteten zu bestimmen, erfordert gerade in der Feinsuche auch eine andere Darstellung auf einer Anzeigeeinheit für den Suchenden als bisher bekannt. Die bisherige Darstellung zielt vor allem auf die Vermittlung einer momentanen Handlungsanweisung ab. So wird in der Grobsuche, wenn es vor allem der magnetischen Feldlinie zu folgen gilt, als wesentliches Merkmal die aktuell einzuhaltende Richtung (neben der Entfernung) angezeigt. In der Feinsuche liegt das Hauptaugenmerk auf dem manuellen Finden des Entfernungsminimums, entsprechend wird hier üblicherweise nur die aktuelle Entfernung ohne Richtung angezeigt.

Im Fall des neuen Suchprozesses tritt an die Stelle der momentanen Handlungsanweisung die Darstellung des voraussichtlichen Verlaufs der gesamten weiteren Suche. Es wird also das Ziel mit allen, in der jeweiligen Phase relevanten Informationen angezeigt. Dazu gehört im zweidimensionalen Fall die tatsächliche Lage des Ziels bezogen auf die momentane Position des Suchenden, im dreidimensionalen Fall kommt die Verschüttungstiefe hinzu.

Mit Bezug auf Fig. 4a wird demnach in größerer Entfernung der Schnee opak dargestellt. Weiterhin wird eine Suchrichtung angezeigt sowie eine Entfernungsanzeige. Im Nahbereich, siehe Fig. 4b, wird der Schnee transparent dargestellt mit einer maßstäblichen Repräsentation der Verschüttungstiefe. Überdies wird die Tiefe in Metern angezeigt.

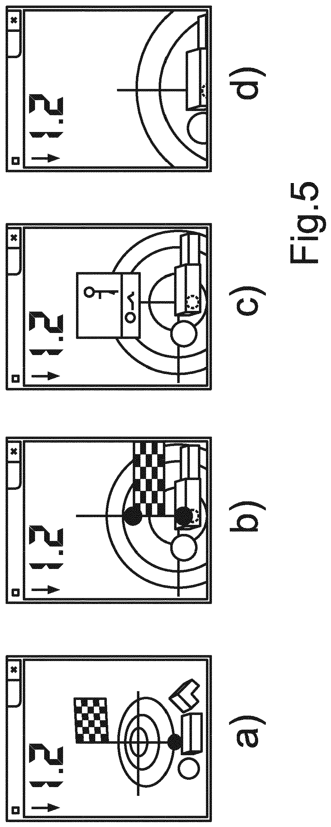

Im Falle der Feinsuche kann die Darstellung ein Fadenkreuz umfassen. Der Suchende kann ein Punkt sein, der mit dem Zentrum des Fadenkreuzes in Deckung gebracht werden muss. In diesem Zusammenhang zeigt Fig. 5 die entsprechenden Anzeigen auf der Anzeigevorrichtung bei der Feinsuche: Fig. 5a zeigt den Nahbereich, bei dem die Tiefe geschätzt und angezeigt werden kann. Fig. 5b zeigt die Situation kurz vor dem Ziel, während Fig. 5c die optimale Position zeigt, bei der die Suche beendet ist und sondiert werden kann. Fig. 5d zeigt die Situation, wenn zu weit gegangen wurde, das heißt der Verschüttete läuft aus dem unteren Bildrand heraus.

Ebenso möglich ist eine wesentlich anschaulichere, perspektivische, dreidimensionale Darstellung, die den Verschütteten (annähernd) maßstäblich in der gemessenen Verschüttungstiefe unter dem Schnee aus der Blickrichtung des Suchenden zeigt. Dabei ist wesentlich:

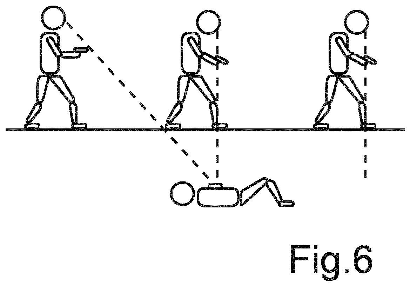

- Die Perspektive gibt realistisch den Blick wieder, den der Sucher hätte, wenn er den Verschütteten oder seinen Projektionspunkt auf die Schneeoberfläche sehen könnte.
- Die Schneeoberfläche ist grafisch angedeutet, im Beispiel durch die Zielringe, siehe hierzu Fig. 4b.
- Die Verschüttungstiefe wird erst in unmittelbarer Nähe angezeigt, siehe hierzu Fig. 4b, so dass Geländeunebenheiten keinen signifikanten Einfluss mehr auf die tatsächliche Tiefe haben.
- In größerer Entfernung, wenn die Anzeige der Verschüttungstiefe keinen Sinn ergibt, wird der Schnee opak (intransparent) dargestellt, siehe hierzu Fig. 4a. Der Suchende sieht dann nur eine Markierung der Projektion der Position des Verschütteten auf die dargestellte Schneeoberfläche. Dieser Projektionspunkt kann zum Beispiel mit einer Zielfahne dargestellt werden.
- In geringer Entfernung (ab etwa 10 m) wird der Schnee transparent dargestellt, siehe hierzu Fig. 4b. Man sieht den Verschütteten unter dem Schnee liegen. Die Verschüttungstiefe kann maßstäblich dargestellt werden.
- Die Blickrichtung ist der jeweiligen Situation entsprechend gewählt. Mit Bezug auf Fig. 6 bleibt beim Überlaufen des Verschütteten die Perspektive senkrecht nach unten gerichtet, man blickt nicht nach hinten, ohne sich komplett umzudrehen. Damit ergibt sich die realistische Darstellung gemäß Fig. 5. Ebenfalls in Fig. 5 gezeigt ist der Hinweis zum Sondieren (Punktortung), siehe Fig. 5c, bei Erreichen der Zielposition.

## Patentansprüche

1. Verfahren zum Suchen eines Sendegeräts (15) mit einem Suchgerät (18), das mindestens eine erste und eine zweite Antenne zum Empfangen eines Sendesignals des Sendegeräts (15) umfasst, wobei das Sendesignal mit einer bestimmten Sendepuls-Periode ausgesendete Sendepulse umfasst, sowie eine Lagebestimmungsvorrichtung zum Bestimmen zumindest einer Orientierungsänderung des Suchgeräts (18), folgende Schritte umfassend:

a) Erfassen der vektoriellen magnetischen Feldstärken [$Hv_1^{meas}$, $Hu_1^{meas}$, $Hv_2^{meas}$, $Hu_2^{meas}$] des vom Sendegeräts (15) ausgesendeten Feldes in zumindest zwei Dimensionen für mindestens einen ersten und einen zweiten Messpunkt relativ zu einer Bezugsachse des von einem Suchenden geführten Suchgeräts (18);

weiterhin umfassend folgende Schritte zur Bestimmung eines Positionsvektors [$p_i$], der den Ort zumindest eines Messpunkts relativ zum Ort des Sendegeräts (15) wiedergibt:

b) Erfassen zumindest einer Orientierungsdifferenz ,$\varphi_2$-$\varphi_1$, des Suchgeräts (18) zwischen einer Orientierung der Bezugsachse des Suchgeräts (18) in dem ersten Messpunkt und einer Orientierung der Bezugsachse des Suchgeräts (18) in dem zweiten Messpunkt;
c) Annehmen mindestens einer geometrischen Beziehung zwischen zumindest dem ersten und dem zweiten Messpunkt, basierend auf einer eingeführten geometrischen Restriktion für die Bewegung des Suchenden;
d) Annehmen von Anfangswerten für den Positionsvektor [$p_i$] in zumindest zwei Dimensionen in zumindest dem ersten und dem zweiten Messpunkt;
e) Annehmen einer Orientierung ($\alpha$) einer Sendeantenne (16) des Sendegeräts (15) bezogen auf eine erste vorgebbare Referenzrichtung;
f) Berechnen der vektoriellen magnetischen Feldstärken [$Hv_1^{calc}$, $Hu_1^{calc}$, $Hv_2^{calc}$, $Hu_2^{calc}$] des vom Sendegerät (15) ausgesendeten Feldes in zumindest zwei Dimensionen für zumindest den ersten und den zweiten Messpunkt auf der Basis der Annahmen nach den Schritten c) bis e) sowie der erfassten Orientierungsdifferenz ,$\varphi_2$-$\varphi_1$, gemäß Schritt b);
g) Berechnen eines Fehlervektors [g] zwischen den in Schritt a) erfassten vektoriellen magnetischen Feldstärken und den in Schritt f) berechneten vektoriellen magnetischen Feldstärken; und
h) Numerisches Minimieren einer Funktion, E, des in Schritt g) berechneten Fehlervektors [g] durch Verändern der in den Schritten c) bis e) getroffenen Annahmen bis eine vorgebbare Toleranzschwelle, tol, für die Funktion, E, des Fehlervektors [g] unterschritten wird.

2. Verfahren nach Anspruch 1,
**dadurch gekennzeichnet**
**dass** in Schritt a) die vektorielle magnetische Feldstärke des vom Sendegerät (15) ausgesendeten Feldes in drei Dimensionen erfasst wird;
**dass** in Schritt d) die Anfangswerte des Positionsvektors [$p_i$] in drei Dimensionen angenommen werden;
**dass** in Schritt e) die Orientierung ($\alpha$, $\beta$) zumindest der ersten und der zweiten Antenne bezogen auf zwei unterschiedliche Referenzrichtungen angenommen wird; und
**dass** in Schritt f) die vektoriellen magnetischen Feldstärken in drei Dimensionen berechnet werden.

3. Verfahren nach einem der Ansprüche 1 oder 2,
**dadurch gekennzeichnet,**
**dass** in Schritt b) die Orientierung des Suchgeräts (18) für zumindest den ersten und den zweiten Messpunkt bezogen auf eine zweite vorgebbare Referenzrichtung (N) erfasst wird.

4. Verfahren nach einem der vorhergehenden Ansprüche,
**dadurch gekennzeichnet,**
**dass** in Schritt h) eine Funktion, E, des Fehlervektors [g] dessen quadratische oder euklidische Norm ist.

5. Verfahren nach einem der vorhergehenden Ansprüche,
**dadurch gekennzeichnet,**
**dass** der in Schritt g) aufgestellte Fehlervektor zusätzliche Komponenten zur Berücksichtigung der Abweichung der vom Suchenden zwischen zumindest dem ersten und dem zweiten Messpunkt zurückgelegten Wegkurve von der geometrischen Beziehung gemäß Schritt c) enthält.

6. Verfahren nach einem der vorhergehenden Ansprüche,
**gekennzeichnet durch** folgende weiteren Schritte:

i) Wiederholen der Schritte a) bis h) für mindestens einen weiteren Block mit mindestens zwei Messpunkten; und
j) Iteratives Verbessern des sich für den mindestens einen weiteren Block ergebenden Positionsvektors [$p_i$] **durch** Kombinieren mit dem Positionsvektor [$p_i$] mindestens eines vorhergehenden Blocks.

7. Verfahren nach Anspruch 6,

**dadurch gekennzeichnet,**

**dass** die Schritte i) und j) mit jedem neuen Block von Messpunkten wiederholt werden, so dass in die Minimierung des Fehlervektors [g] für den mindestens einen weiteren Block kumulierte Zwischenergebnisse früherer Blöcke einbezogen werden, wobei in Schritt j) der jeweils vorhergehende Positionsvektor [p$_i$] iterativ verbessert wird.

8. Verfahren nach einem der vorhergehenden Ansprüche,
   **dadurch gekennzeichnet,**
   **dass** in den Schritten h) ein iteratives Optimierungsverfahren, bevorzugt ein Gauß-Newton-Verfahren oder ein Levenberg-Marquardt-Verfahren, und in Schritt j) ein Extended Kalman Filter, angewendet wird.

9. Verfahren nach einem der vorhergehenden Ansprüche,
   **dadurch gekennzeichnet,**
   **dass** die geometrische Beziehung, die in Schritt c) angenommen wird, mindestens eine der folgenden ist:

   c1) die Messpunkte liegen auf einer Trajektorie, die unabhängig vom Verlauf des vom Sendegerät (15) ausgesendeten magnetischen Feldes ist, insbesondere auf einer Geraden, einem Kreis oder einer Parabel;
   c2) die Messpunkte liegen auf einer magnetischen Feldlinie des vom Sendegerät (15) ausgesendeten magnetischen Feldes.

10. Verfahren nach Anspruch 9,
    **dadurch gekennzeichnet,**
    **dass** während einer ersten Phase die Messpunkte jeweiliger Blöcke auf einer magnetischen Feldlinie liegen, wobei während einer zweiten Phase, die sich an die erste Phase anschließt, die Messpunkte jeweiliger Blöcke auf einer Trajektorie liegen, insbesondere einer Geraden, deren Richtung sich aus dem Ergebnis der Minimierung des Fehlervektors [g] in Schritt h) ergibt.

11. Verfahren nach einem der vorhergehenden Ansprüche,
    **dadurch gekennzeichnet,**
    **dass** während der Suche auf einer Anzeigeeinheit des Suchgeräts (18) eine Suchrichtung für den Suchenden angezeigt wird, die der in Schritt c) angenommenen geometrischen Beziehung entspricht, oder
    die gemäß dem in Schritt h) bestimmten Positionsvektor [p$_i$] in die Richtung des Sendegeräts (15) weist.

12. Verfahren nach einem der vorhergehenden Ansprüche,
    **dadurch gekennzeichnet,**
    **dass** in Schritt b) die Orientierungsdifferenz, $\varphi_2$-$\varphi_1$, oder die Orientierung des Suchgeräts (18) mittels eines Kompasses und/oder mittels eines rotatorischen Inertialsystems erfasst wird.

13. Verfahren nach Anspruch 11,
    **gekennzeichnet durch** folgenden weiteren Schritt:

    k) Perspektivisches Anzeigen des Ziels der Suche auf der Anzeigeeinheit.

14. Verfahren nach Anspruch 13,
    **dadurch gekennzeichnet,**
    **dass** das Ziel, wenn sich der Suchende in einem ersten vorgebbaren Entfernungsbereich vom Ziel befindet, zweidimensional auf der Anzeigeeinheit angezeigt wird,
    wobei das Ziel, wenn sich der Suchende in einem zweiten vorgebbaren Entfernungsbereich befindet, der insbesondere eine geringere Entfernung vom Ziel aufweist als der erste vorgebbare Entfernungsbereich, dreidimensional auf der Anzeigeeinheit angezeigt wird.

15. Verfahren nach Anspruch 14,
    **dadurch gekennzeichnet,**
    **dass** im zweiten vorgebbaren Entfernungsbereich eine Verschüttungstiefe des Sendegeräts (15) auf der Anzeigeeinheit angezeigt wird.

16. Suchgerät (18) zum Suchen eines Sendegeräts (15) umfassend:

    - mindestens eine erste und eine zweite Antenne zum Empfangen eines Sendesignals des Sendegeräts (15),

- eine Lagebestimmungsvorrichtung zum Bestimmen zumindest einer Orientierungsänderung des Suchgeräts (18), und
- eine Verarbeitungsvorrichtung, die zumindest mit der ersten und der zweiten Antenne und der Lagebestimmungsvorrichtung gekoppelt ist, wobei die Verarbeitungsvorrichtung ausgelegt ist, die vektoriellen magnetischen Feldstärken des vom Sendegerät (15) ausgesendeten Feldes in zumindest zwei Dimensionen für mindestens einen ersten und einen zweiten Messpunkt relativ zu einer Bezugsachse des von einem Suchenden geführten Suchgeräts (18) zu erfassen,

wobei die Verarbeitungsvorrichtung weiterhin ausgelegt ist, zumindest eine Orientierungsdifferenz, $\varphi_2$-$\varphi_1$, des Suchgeräts (18) zwischen einer Orientierung der Bezugsachse des Suchgeräts (18) in dem ersten Messpunkt und einer Orientierung der Bezugsachse des Suchgeräts (18) in dem zweiten Messpunkt zu erfassen;

wobei das Suchgerät (18) zur Bestimmung eines Positionsvektors [$p_i$], der den Ort zumindest eines Messpunkts relativ zum Ort des Sendegeräts (15) wiedergibt, weiterhin umfasst:

- eine Speichervorrichtung, in der Folgendes abgelegt ist:

-- eine angenommene geometrische Beziehung zwischen zumindest dem ersten und dem zweiten Messpunkt, basierend auf einer eingeführten geometrischen Restriktion für die Bewegung des Suchenden;
-- angenommene Anfangswerte für einen Positionsvektor [$p_i$] in zumindest zwei Dimensionen in zumindest dem ersten und dem zweiten Messpunkt, wobei der Positionsvektor [$p_i$] die Position des Suchgeräts (18) relativ zum Sendegerät (15) darstellt; sowie
-- eine angenommene Orientierung ($\alpha$) einer Sendeantenne (16) des Sendegeräts (15) bezogen auf eine erste vorgebbare Referenzrichtung;

- wobei die Verarbeitungsvorrichtung ausgelegt ist, die vektoriellen magnetischen Feldstärken des vom Sendegerät (15) ausgesendeten Feldes in zumindest zwei Dimensionen für zumindest den ersten und den zweiten Messpunkt auf der Basis der in der Speichervorrichtung abgelegten Annahmen sowie einer mittels der Lagebestimmungsvorrichtung erfassten Orientierungsdifferenz, $\varphi_2$-$\varphi_1$, zu berechnen;
- wobei die Verarbeitungsvorrichtung weiterhin ausgelegt ist, eine Funktion, E, eines Fehlervektors [g] zwischen den unter Verwendung zumindest der ersten und der zweiten Antenne erfassten vektoriellen magnetischen Feldstärken und den berechneten vektoriellen magnetischen Feldstärken zu berechnen und durch Verändern der in der Speichervorrichtung abgelegten Annahmen numerisch zu minimieren bis eine vorgebbare Toleranzschwelle, tol, für den Fehlervektor [g] unterschritten wird.

## Claims

1. Method for searching a transmitter (15) with a detector (18), which includes at least a first and a second antenna for receiving a transmit signal of the transmitter (15), wherein the transmit signal includes transmit pulses emitted with a certain transmit pulse period, as well as a position determining device for determining at least one orientation variation of the detector (18),
comprising the following steps:

a) detecting the vectorial magnetic field strengths ($Hv_1^{meas}$, $Hu_1^{meas}$, $Hv_2^{meas}$, $Hu_2^{meas}$) of the field emitted by the transmitter (15) in at least two dimensions for at least a first and a second measurement point relative to a reference axis of the detector (18) carried by a searcher;

further comprising the following steps for determining a position vector [$p_i$], which represents the location of at least one measurement point relative to the location of the transmitter (15):

b) detecting at least one orientation difference, $\varphi_2$-$\varphi_1$, of the detector (18) between an orientation of the reference axis of the detector (18)
in the first measurement point and an orientation of the reference axis of the detector (18) in the second measurement point;
c) assuming at least one geometric relation between at least the first and the second measurement point, based on an introduced geometric restriction for the movement of the searcher;
d) assuming initial values for the position vector [$p_i$] in at least two dimensions in at least the first and the second measurement point;

e) assuming an orientation ($\alpha$) of a transmitting antenna (16) of the transmitter (15) related to a first presettable reference direction;

f) calculating the vectorial magnetic field strengths ($Hv_1{}^{calc}$, $Hu_1{}^{calc}$, $Hv_2{}^{calc}$, $Hu_2{}^{calc}$) of the field emitted by the transmitter (15) in at least two dimensions for at least the first and the second measurement point based on the assumptions according to the steps c) to e) as well as the detected orientation difference, $\varphi_2$-$\varphi_1$, according to step b);

g) calculating an error vector [g] between the vectorial magnetic field strengths detected in step a) and the vectorial magnetic field strengths calculated in step f); and

h) numerically minimizing a function, E, of the error vector [g] calculated in step g) by altering the assumptions made in steps c) to e) until a presettable tolerance threshold, tol, for the function, E, of the error vector [g] is undercut.

2. Method according to claim 1,
   **characterized in that**
   in step a) the vectorial magnetic field strength of the field emitted by the transmitter (15) is acquired in three dimensions;
   in step d) the initial values of the position vector [$p_i$] are assumed in three dimensions;
   in step e) the orientation ($\alpha$, $\beta$) of at least the first and the second antenna related to two different reference directions is assumed; and
   in step f) the vectorial magnetic field strengths are calculated in three dimensions.

3. Method according to anyone of claims 1 or 2,
   **characterized in that**
   in step b) the orientation of the detector (18) is detected for at least the first and the second measurement point related to a second presettable reference direction (N).

4. Method according to anyone of the preceding claims,
   **characterized in that**
   in step h) a function, E, of the error vector [g] is the quadratic or Euclidean norm thereof.

5. Method according to anyone of the preceding claims,
   **characterized in that**
   the error vector established in step g) contains additional components for considering the deviation of the path curve traveled by the searcher between at least the first and the second measurement point from the geometric relation according to step c).

6. Method according to anyone of the preceding claims,
   **characterized by** the following further steps:

   i) repeating the steps a) to h) for at least one further block with at least two measurement points; and
   j) iteratively improving the position vector [$p_i$] resulting for the at least one further block by combining with the position vector [$p_i$] of at least one preceding block.

7. Method according to claim 6,
   **characterized in that**
   the steps i) and j) are repeated with each new block of measurement points such that cumulated intermediate results of previous blocks are integrated in the minimization of the error vector [g] for the at least one further block, wherein in step j) the respectively preceding position vector [$p_i$] is iteratively improved.

8. Method according to anyone of the preceding claims,
   **characterized in that**
   in the steps h) an iterative optimization method, preferably a Gauss-Newton method or a Levenberg-Marquardt method, and in step j) an extended Kalman filter is applied.

9. Method according to anyone of the preceding claims,
   **characterized in that**
   the geometric relation assumed in step c) is at least one of the following:

c1) the measurement points are on a trajectory independent of the pathway of the magnetic field emitted by the transmitter (15), in particular on a straight line, a circle or a parabola;
c2) the measurement points are on a magnetic field line of the magnetic field emitted by the transmitter (15).

10. Method according to claim 9,
**characterized in that**
during a first phase, the measurement points of respective blocks are on a magnetic field line, wherein during a second phase subsequent to the first phase, the measurement points of respective blocks are on a trajectory, in particular a straight line, the direction of which results from the result of minimization of the error vector [g] in step h).

11. Method according to anyone of the preceding claims,
**characterized in that**
during the search, a searching direction is displayed for the searcher on a display unit of the detector (18), which corresponds to the geometric relation assumed in step c), or which points to the direction of the transmitter (15) according to the position vector [$p_i$] determined in step h).

12. Method according to anyone of the preceding claims,
**characterized in that**
in step b) the orientation difference, $\varphi_2$-$\varphi_1$, or the orientation of the detector (18) is detected by means of a compass and/or by means of a rotational inertial system.

13. Method according to claim 11,
**characterized by** the following further step:

k) perspective displaying of the target of the search on a display unit.

14. Method according to claim 13,
**characterized in that**
the target is two-dimensionally displayed on the display unit, if the searcher is in a first presettable distance range from the target,
wherein the target is three-dimensionally displayed on the display unit, if the searcher is in a second presettable distance range, which in particular has a lower distance from the target than the first presettable distance range.

15. Method according to claim 14,
**characterized in that**
in the second presettable distance range, a burial depth of the transmitter (15) is displayed on the display unit.

16. Detector (18) for searching a transmitter (15) comprising:

- at least a first and a second antenna for receiving a transmit signal of the transmitter (15),
- a position determining device for determining at least one orientation variation of the detector (18), and
- a processing device coupled at least to the first and the second antenna and to the position determining device, wherein the processing device is configured to detect the vectorial magnetic field strengths of the field emitted by the transmitter (15) in at least two dimensions for at least a first and a second measurement point relative to a reference axis of the detector (18) carried by a searcher,

wherein the processing device is further configured to detect at least one orientation difference, $\varphi_2$-$\varphi_1$, of the detector (18) between an orientation of the reference axis of the detector (18) in the first measurement point and an orientation of the reference axis of the detector (18) in the second measurement point;
wherein the detector (18) for determining a position vector [$p_i$] representing the location of at least one measurement point relative to the location of the transmitter (15) further includes:

- a storage device, in which the following is stored:

-- an assumed geometric relation between at least the first and the second measurement point based on an introduced geometric restriction for the movement of the searcher;
-- assumed initial values for a position vector [$p_i$] in at least two dimensions in at least the first and the second measurement point, wherein the position vector [$p_i$] represents the position of the detector (18) relative to the transmitter (15); as well as

-- an assumed orientation ($\alpha$) of a transmitting antenna (16) of the transmitter (15) related to a first presettable reference direction;

- wherein the processing device is configured to calculate the vectorial magnetic field strengths of the field emitted by the transmitter (15) in at least two dimensions for at least the first and the second measurement point based on the assumptions stored in the storage device as well as an orientation difference, $\varphi_2$-$\varphi_1$, detected by means of the position determining device;

- wherein the processing device is further configured to calculate a function E of an error vector [g] between the vectorial magnetic field strengths detected using at least the first and the second antenna and the calculated vectorial magnetic field strengths and to numerically minimize it by altering the assumptions stored in the storage device until a presettable tolerance threshold, tol, for the error vector [g] is undercut.

**Revendications**

1. Procédé de recherche d'un appareil d'émission (15), avec un appareil de recherche (18), qui comprend au moins une première et une seconde antenne de réception d'un signal d'émission de l'appareil d'émission (15), le signal d'émission comprenant des impulsions d'émission, émises avec une certaine période d'impulsion d'émission, ainsi qu'un équipement de détermination de position, destiné à déterminer au moins un changement d'orientation de l'appareil de recherche (18),

   comprenant les étapes suivantes, consistant à :

   a) capter les forces de champs magnétiques vectoriels [$Hv_1^{meas}$, $Hu_1^{meas}$, $Hv_2^{meas}$, $Hu_2^{meas}$] du champ, émis par l'appareil d'émission (15) en au moins deux dimensions pour au moins un premier et un second point de mesure par rapport à un axe de référence de l'appareil de recherche (18), dirigé par l'auteur d'une recherche ; comprenant en outre les étapes suivantes, consistant à déterminer un vecteur de position [$\rho_i$], qui restitue le lieu au moins d'un point de mesure par rapport au lieu de l'appareil d'émission (15) ;

   b) capter au moins une différence d'orientation $\varphi_2$ - $\varphi_1$ de l'appareil de recherche (18) entre une orientation de l'axe de référence de l'appareil de recherche (18) dans le premier point de mesure et une orientation de l'axe de référence de l'appareil de recherche (18) dans le second point de mesure ;

   c) supposer au moins une relation géométrique entre au moins le premier et le second point de mesure, sur la base d'une restriction géométrique introduite pour le mouvement de l'auteur de la recherche ;

   d) supposer des valeurs de départ pour le vecteur de position [$\rho_i$] en au moins deux dimensions dans au moins le premier et le second point de mesure ;

   e) supposer une orientation ($\alpha$) d'une antenne d'émission (16) de l'appareil d'émission (15) par rapport à une première direction de référence prédéfinissable ;

   f) calculer les forces de champs magnétiques vectoriels [$Hv1^{calc}$, $Hu_1^{calc}$, $Hv_2^{calc}$, $Hu_2^{calc}$] du champ, émis par l'appareil d'émission (15) en au moins deux dimensions pour au moins le premier et le second point de mesure, sur la base des hypothèses suivant les étapes c) à e), ainsi que de la différence d'orientation captée $\varphi_2$ - $\varphi_1$, conformément à l'étape b) ;

   g) calculer un vecteur d'erreur [g] entre les forces de champs magnétiques vectoriels captées au cours de l'étape a) et les forces de champs magnétiques vectoriels, calculées au cours de l'étape f) et

   h) minimiser numériquement une fonction E du vecteur d'erreur [g], calculé au cours de l'étape g), par modification des hypothèses, émises au cours des étapes c) à e), jusqu'à ce qu'un seuil de tolérance prédéfinissable tol ne soit pas atteint pour la fonction E du vecteur d'erreur [g].

2. Procédé selon la revendication 1,
   **caractérisé en ce**

   qu'au cours de l'étape a), la force de champ magnétique vectoriel du champ, émis par l'appareil d'émission (15), est captée en trois dimensions ;

   qu'au cours de l'étape d), les valeurs de départ du vecteur de position [$\rho_1$] sont supposées en trois dimensions ;

   qu'au cours de l'étape e), l'orientation ($\alpha$, ß) au moins de la première et de la seconde antenne est supposée par rapport à deux directions de référence différentes et

   qu'au cours de l'étape f), les forces de champs magnétiques vectoriels sont calculées en trois dimensions.

3. Procédé selon l'une des revendications 1 ou 2,
   **caractérisé en ce**

**qu'**au cours de l'étape b), l'orientation de l'appareil de recherche (18) est captée pour au moins le premier et le second point de mesure par rapport à une seconde direction de référence prédéfinissable (N).

4. Procédé selon l'une des revendications précédentes,
**caractérisé en ce**
**qu'**au cours de l'étape h), une fonction E du vecteur d'erreur [g] est sa norme quadratique ou euclidienne.

5. Procédé selon l'une des revendications précédentes,
**caractérisé en ce que**
le vecteur d'erreur, établi au cours de l'étape g), contient des composantes supplémentaires, destinées à prendre en compte la divergence de la courbe de trajectoire, parcourue par l'auteur de la recherche entre au moins le premier et le second point de mesure, par rapport à la relation géométrique, conformément à l'étape c).

6. Procédé selon l'une des revendications précédentes,
**caractérisé par** les autres étapes suivantes :

   i) répétition des étapes a) à h) pour au moins un autre bloc avec au moins deux points de mesure et
   j) amélioration itérative du vecteur de position [$\rho_1$], résultant pour le au moins un autre bloc, par combinaison avec le vecteur de position [$\rho_i$] d'au moins un bloc précédent.

7. Procédé selon la revendication 6,
**caractérisé en ce que**
les étapes i) et j) seront répétées avec chaque nouveau bloc de points de mesure, de sorte que des résultats intermédiaires de blocs plus anciens, cumulés pour le au moins un autre bloc, seront intégrés dans la minimisation du vecteur d'erreur [g], le vecteur de position [$\rho_i$], respectivement précédent, étant amélioré de manière itérative au cours de l'étape j).

8. Procédé selon l'une des revendications précédentes,
**caractérisé en ce**
**qu'**au cours des étapes h), un procédé d'optimisation itératif, de préférence un procédé Gauss-Newton ou un procédé Levenberg-Marquardt et, au cours de l'étape j), un filtre de Kalman étendu, est appliqué.

9. Procédé selon l'une des revendications précédentes,
**caractérisé en ce que**
la relation géométrique, qui est supposée au cours de l'étape c), est au moins l'une des suivantes :

   c1) les points de mesure se trouvent sur une trajectoire, qui est indépendante du parcours du champ magnétique, émis par l'appareil d'émission (15), en particulier sur une droite, un cercle ou une parabole ;
   c2) les points de mesure se trouvent sur une ligne de champ magnétique du champ magnétique, émis par l'appareil d'émission (15).

10. Procédé selon la revendication 9,
**caractérisé en ce que**,
pendant une première phase, les points de mesure de blocs respectifs se trouvent sur une ligne de champ magnétique, moyennant quoi, pendant une seconde phase, qui est rattachée à la première phase, les points de mesure de blocs respectifs se trouvent sur une trajectoire, en particulier une droite, dont la direction résulte du résultat de la minimisation du vecteur d'erreur [g] au cours de l'étape h).

11. Procédé selon l'une des revendications précédentes,
**caractérisé en ce que**,
pendant la recherche sur une unité d'affichage de l'appareil de recherche (18), une direction de recherche est affichée pour l'auteur de la recherche, qui correspond à la relation géométrique, supposée au cours de l'étape c) ou qui, conformément au vecteur de position [$\rho_i$], défini au cours de l'étape h), montre la direction de l'appareil d'émission (15).

12. Procédé selon l'une des revendications précédentes,
**caractérisé en ce que**,
au cours de l'étape b), la différence d'orientation $\varphi_2 - \varphi_1$ ou l'orientation de l'appareil de recherche (18) est captée au moyen d'une boussole et / ou au moyen d'un système inertiel rotatif.

**13.** Procédé selon la revendication 11,
**caractérisé par** l'autre étape suivante :

k) affichage en perspective de l'objectif de la recherche sur l'unité d'affichage.

**14.** Procédé selon la revendication 13,
**caractérisé en ce que**
l'objectif, lorsque l'auteur de la recherche se trouve dans une première plage d'éloignement prédéfinissable par rapport à l'objectif, est affiché en deux dimensions sur l'unité d'affichage,
l'objectif, lorsque l'auteur de la recherche se trouve dans une seconde plage d'éloignement prédéfinissable, qui présente en particulier un éloignement par rapport à l'objectif plus faible que la première plage d'éloignement prédéfinissable, étant affiché en trois dimensions sur l'unité d'affichage.

**15.** Procédé selon la revendication 14,
**caractérisé en ce que**, dans la seconde plage d'éloignement prédéfinissable, une profondeur d'ensevelissement de l'appareil d'émission (15) est affichée sur l'unité d'affichage.

**16.** Appareil de recherche (18), destiné à rechercher un appareil d'émission (15), comprenant :

- au moins une première et une seconde antenne, destinées à recevoir un signal d'émission de l'appareil d'émission (15),
- un équipement de détermination de position, destiné à déterminer au moins un changement d'orientation de l'appareil de recherche (18) et
- un équipement de traitement, qui est couplé au moins à la première et à la seconde antenne et à l'équipement de détermination de position,

l'équipement de traitement étant conçu pour capter les forces de champs magnétiques vectoriels du champ, émis par l'appareil d'émission (15), en au moins deux dimensions pour au moins un premier et un second point de mesure par rapport à un axe de référence de l'appareil de recherche (18), dirigé par l'auteur d'une recherche,
l'équipement de traitement étant conçu en outre pour capter au moins une différence d'orientation $\varphi_2 - \varphi_1$ de l'appareil de recherche (18) entre une orientation de l'axe de référence de l'appareil de recherche (18) dans le premier point de mesure et une orientation de l'axe de référence de l'appareil de recherche (18) dans le second point de mesure ;
l'appareil de recherche (18) comprenant en outre, pour la détermination d'un vecteur de position $[\rho_i]$, qui restitue le lieu au moins d'un point de mesure par rapport au lieu de l'appareil d'émission (15) :

- un équipement de stockage, dans lequel il est déposé ce qui suit :

- une relation géométrique supposée entre au moins le premier et le second point de mesure, sur la base d'une restriction géométrique, sur la base d'une restriction géométrique introduite pour le mouvement de l'auteur de la recherche ;
- des valeurs de départ supposées pour un vecteur de position $[\rho_i]$ dans au moins deux dimensions dans au moins le premier et le second point de mesure, le vecteur de position $[\rho_i]$ représentant la position de l'appareil de recherche (18) par rapport à l'appareil d'émission (15), ainsi
- qu'une orientation supposée $(\alpha)$ d'une antenne d'émission (16) de l'appareil d'émission (15) par rapport à une première direction de référence prédéfinissable,
- l'équipement de traitement étant conçu pour calculer les forces de champs magnétiques vectoriels du champ, émis par l'appareil d'émission (15) dans au moins deux dimensions pour au moins le premier et le second point de mesure, sur la base des hypothèses, déposées dans l'équipement de stockage, ainsi que d'une différence d'orientation $\varphi_2 - \varphi_1$, captée au moyen de l'équipement de détermination de position,
- l'équipement de traitement étant conçu en outre pour calculer une fonction E d'un vecteur d'erreur [g] entre les forces de champs magnétiques vectoriels, captées en utilisant au moins la première et la seconde antenne et les forces de champs magnétiques vectoriels calculées et pour la réduire numériquement en modifiant les hypothèses, déposées dans l'équipement de stockage, jusqu'à ce qu'un seuil de tolérance prédéfinissable tol ne soit pas atteint pour le vecteur d'erreur [g].

Fig.1
(SdT)

Fig.2

Fig.3

a)                    b)

Fig.4

a)          b)          c)          d)

Fig.5

EP 2 573 583 B1

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008016137 A1
- EP 2065722 A1
- EP 1577679 A1
- US 20050270234 A1
- US 20060128354 A1

**In der Beschreibung aufgeführte Nicht-Patentliteratur**

- **NOCEDAL, JORGE ; WRIGHT STEPHEN J.** Numerical Optimization. Springer, 1999